**Europäisches Patentamt**

**European Patent Office**

**Office européen des brevets**

(11) Veröffentlichungsnummer: **0 259 742**
**B1**

(12) **EUROPÄISCHE PATENTSCHRIFT**

(45) Veröffentlichungstag der Patentschrift:
17.10.90

(51) Int. Cl.⁵: **B23D 25/12**

(21) Anmeldenummer: 87112673.6

(22) Anmeldetag: 31.08.87

(54) Rotationsschere zum Trennen von Walzgut.

(30) Priorität: 12.09.86 DE 3631034

(43) Veröffentlichungstag der Anmeldung:
16.03.88 Patentblatt 88/11

(45) Bekanntmachung des Hinweises auf die Patenterteilung:
17.10.90 Patentblatt 90/42

(84) Benannte Vertragsstaaten:
AT DE ES IT SE

(56) Entgegenhaltungen:
AT-B- 323 522
DD-A- 158 093
DE-B- 1 149 968
DE-B- 1 271 507
GB-A- 629 935
GB-A- 813 970
US-A- 3 220 293

(73) Patentinhaber: SMS SCHLOEMANN-SIEMAG
AKTIENGESELLSCHAFT,
Eduard-Schloemann-Strasse 4, D-4000 Düsseldorf 1(DE)

(72) Erfinder: Grenz, Günter, Gatherstrasse 38,
D-4005 Meerbusch 2(DE)
Erfinder: Kasper, Karl, Henkenheide 57,
D-4010 Hilden(DE)

(74) Vertreter: Müller, Gerd, Patentanwälte
HEMMERICH-MÜLLER-GROSSE-POLLMEIER-MEY
Hammerstrasse 2, D-5900 Siegen 1(DE)

# Beschreibung

Die vorliegende Erfindung bezieht sich auf eine Rotationsschere für in Drehrichtung im Scherspalt zu förderndes und quer dazu zu schneidendes Walzgut, insbesondere für abgekühlten Stabstahl, bestehend im wesentlichen aus einem Obermesser und einem Untermesser, die gegensinnig in Walzrichtung rotierend umlaufen und mit unterschiedlicher Schneidenform versehen sind; siehe z.B. DD-A 158 093.

Zum Trennen von bewegtem, warmem Walzgut mittels bekannter Rotationsscheren für Rundquerschnitte werden im allgemeinen Flachmesser verwendet, die bei herkömmlichen Baustählen in Walzwerken ausreichende Standseiten erzielen. Die bekannten Rotationsscheren verwenden im allgemeinen Flachmesser mit gleicher Schneidengeometrie für Ober- und Untermesser.

Bei der Anwendung neuer Technologien zur Erzeugung von Baustählen aus der Walzhitze durch Randvergüten, stellte sich allerdings heraus, daß verfahrensbedingt unter Vermeidung einer Reihe von Nachteilen, die Trennung des Walzgutes erst nach dem Durchlauf der Kühlstrecke erfolgen kann, d. h. wenn das Walzgut prozeßbedingt abgekühlt ist und eine erhöhte Festigkeit aufweist. Dabei hat sich herausgestellt, daß die bisher bekannten Schermesser für das Trennen bereits abgekühlten Walzgutes, insbesondere für Stabstahl, nicht geeignet sind, da damit nur unbefriedigende Standzeiten erreicht werden können.

Die weitere Entwicklung ging bisher dahin, eine Anpassung der Schneidrücken an den zu schneidenden Walzquerschnitt vorzusehen, wodurch zwar eine Standzeiterhöhung erzielt werden konnte, jedoch zeigte stets das Obermesser einen erhöhten Verschleiß und bestimmte somit die Standzeit des Messerpaares der Rotationsschere.

Die Aufgabe der vorliegenden Erfindung besteht daher darin, die genannten Nachteile zu vermeiden und Schermesser für eine Rotationsschere vorzustellen, die sich durch eine besonders hohe Standzeit auszeichnen.

Die Lösung dieser Aufgabe gelingt erfindungsgemäß dadurch, daß die wirksamen Schneidkanten während des gesamten Schneidvorganges immer vertikal zueinander angeordnet sind und daß Obermesser und Untermesser je einen Schneidrücken aufweisen, die parallel zur Oberfläche des zu schneidenden Walzgutes beim Auftreffen ausgebildet sind. Auf diese Weise wird vorteilhaft gewährleistet, daß während des Schneidvorganges die Scherspannung am Walzprodukt an den sich direkt gegenüberliegenden Schneiden von Ober- und Untermesser stets am höchsten ist.

Mit der hierdurch optimal angepaßten Schneidengeometrie kann der Verschleiß von Ober- und Untermesser weiter verringert werden.

Eine weitere Ausgestaltung sieht mit Vorteil vor, daß der bzw. die Schneidrücken zweigeteilt sind, wobei die Schneidrücken in Drehrichtung einen Knickabschnitt haben. Der Knickabschnitt am Schneidrücken des Obermessers berührt während des Schneidvorganges nicht das Walzgut.

Mit Vorteil wird die Schneidkante des Obermessers nach hinten entgegen der Drehrichtung durch eine Abschrägung abgestützt, vorzugsweise in einem Winkel von etwa 45 Grad. Mit dieser Maßnahme wird der besonderen Beanspruchung des Obermessers entgegen der Walzrichtung entgegengewirkt und der Angleich der Standzeiten zwischen Ober- und Untermesser optimiert.

Besonders zweckmäßig ist es, wenn Obermesser und Untermesser in ihrer vertikalen Stellung zueinander ohne Überschnitt angeordnet sind. Eine derartige Verfahrensweise ist möglich, da das Abscheren des gekühlten Walzproduktes in Abhängigkeit von Qualität und Temperatur bereits nach einer gewissen Eindringtiefe der Schermesser erfolgt. Hierdurch wird zusätzlich ein störungsfreier Produktionsfluß bei geringer Ablenkung von Stabende und Stabspitze gewährleistet, wobei gleichzeitig die Beanspruchung und Antriebsleistung der Schere stark verringert wird. Montage und Wartung der Schermesser werden durch Wegfall von Überschnitt und Führungsdaumen stark erleichtert.

Ferner ist nach der Erfindung mit Vorteil vorgesehen, daß das Obermesser und das Untermesser quer zur Walzrichtung eine produktbezogene Profilierung aufweisen. Mit dieser Maßnahme kann eine weitere Steigerung der Standzeit der Schermesser bewirkt werden. Die Schneidenprofilierung erfolgt dabei zweckmäßigerweise in Form des zu trennenden Profils, während die nicht am Schneidvorgang direkt beteiligten sich jedoch gegeneinander abwälzenden Randabschnitte von Ober- und Untermesser in Form einer Evolvente ausgebildet sind.

Nach einer weiteren Ausgestaltung sind vorteilhaft die sich überschneidenden bzw. sich aufeinander abwälzenden und nicht am Schneidvorgang beteiligten Abschnitte von Ober- und Untermesser als Evolventen geformt.

Nach der Erfindung ist vorteilhaft vorgesehen, daß Obermesser und Untermesser im Bereich der Schneidkanten und Schneidrücken badnitriert behandelt wurden, um auf diese Weise den Verschleiß der Schermesser zu verringern und so die Standzeit weiter zu verbessern.

Weitere Einzelheiten, Merkmale und Vorteile der Erfindung ergeben sich aus den nachfolgenden Erläuterungen eines in den Zeichnungen schematisch dargestellten Ausführungsbeispieles.

Es zeigen:

Fig. 1 eine schematische Querschnittsdarstellung von Schermessern einer Rotationsschere während des Schneidvorganges,

Fig. 2 eine schematische Darstellung des Schneidvorganges im zeitlichen Ablauf vom Schneidbeginn bis zum Schneidende,

Fig. 3 a/b eine erfindungsgemäße Ausbildung eines profilierten Untermessers im Querschnitt und in Seitenansicht.

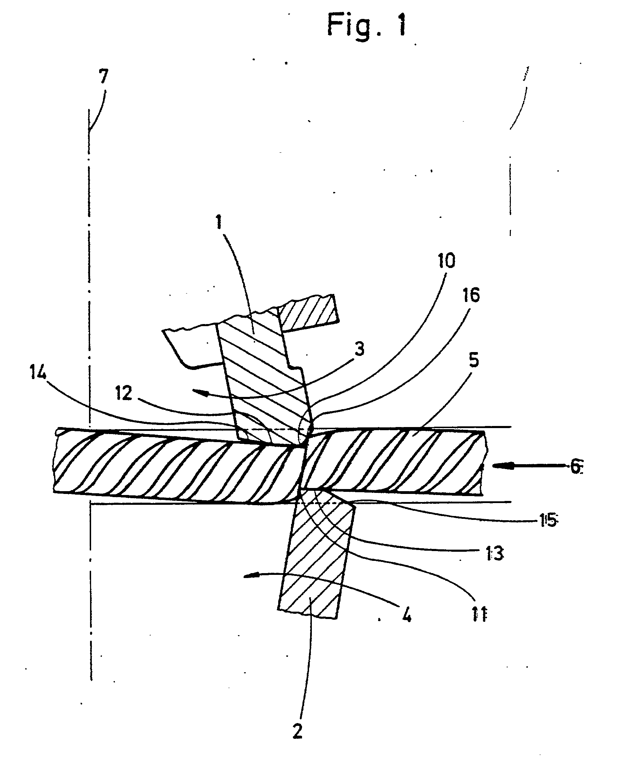

Die erfindungsgemäße Rotationsschere besitzt nach Figur 1 ein Obermessser (1) sowie ein Untermesser (2), die jeweils in Pfeilrichtung (3, 4) eine Rotationsbewegung vollführen und beim Auftreffen auf den Stabstahl (5) diesen während seiner Förderung in Richtung des Pfeiles (6) bis zur Scherenmitte (7) schneidend trennen. Das Obermesser (1) besitzt dabei die Oberschneide (10) und das Untermesser (2) die Unterschneide (11), wobei diese Schneiden (10, 11) während des Schneidvorganges immer vertikal zueinander angeordnet sind. Obermesser (1) und Untermesser (2) weisen vorteilhaft je einen Schneidrücken (12, 13) auf, die zur Oberfläche des zu schneidenden Stabstahls (5) beim Auftreffen auf diesen parallel dazu ausgebildet sind. Zweckmäßigerweise ist der Oberschneidrücken (12) des Obermessers (1) mit einem weiter abgewinkelten Abschnitt (14) versehen und der Unterschneidrücken (13) des Untermessers (2) mit einem Knickabschnitt (15). Zur besseren Stabilität und vorteilhaften Verschleißminderung des Obermessers (1) ist die Oberschneidkante (10) nach hinten entgegen der Walzrichtung durch eine Abschrägung (16) abgestützt.

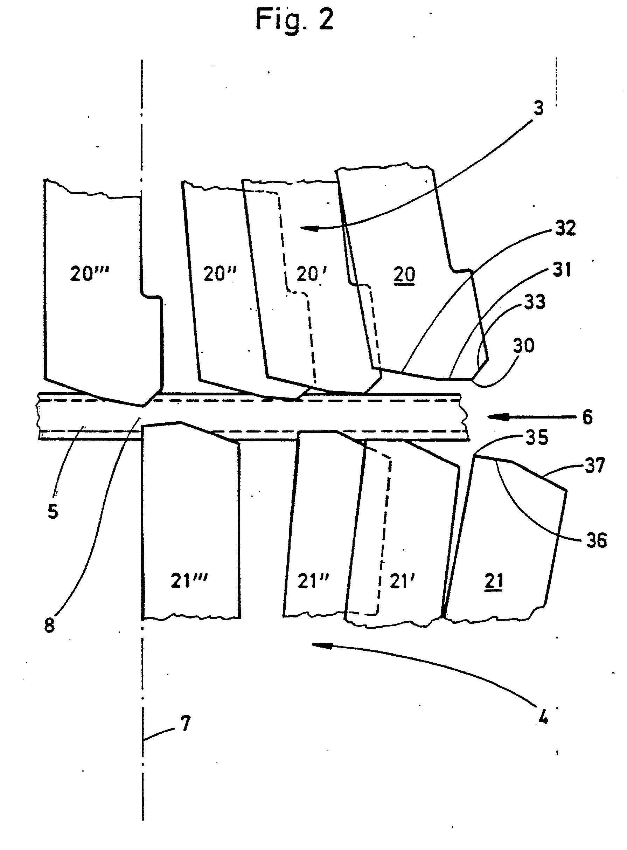

Figur 2 zeigt den Verfahrensablauf des Schneidens des Stabstahles (5), wobei sich das Obermesser (20) und das Untermesser (21) in Walzrichtung (6) gemäß den Rotationspfeilen (3, 4) bewegen. Das Obermesser (20) weist neben der Schneidkante (30) den Oberschneidrücken (31) und einen Knickabschnitt (32) und die Abschrägung (33) auf, wobei zweckmäßigerweise der Knickabschnitt (32) das Walzgut (5) während des Schneidvorganges zu keiner Zeit berührt. Das Untermesser (21) besitzt eine davon unterschiedliche Schneidenform, wobei die Schneidkante (35) zur Schneidkante (30) des Obermessers (20) während des Schneidvorganges immer vertikal angeordnet ist. Der Schneidrücken (36) ist ebenfalls mit einem abgeknickten Abschnitt (37) vesehen.

Die Schneidrücken (31, 36) sind dabei so ausgebildet, daß sie auf die Oberfläche des zu schneidenden Walzgutes nahezu parallel auftreffen, wie das in der Stellung (20', 21') deutlich wird. Weder in der Stellung der Schermesser (20'', 21'') bzw. (20''', 21''') ergibt sich ein Überschnitt der Schermesser, die in ihrer Stellung (20''') und (21''') in der Scherenmitte (7) im Messerspalt (8) ihre geringste Entfernung zueinander aufweisen.

Durch Einrichten der Messer (20, 21) ohne Überschnitt mit einem in Abhängigkeit vom Querschnitt des Walzgutes (5) einzustellenden Messerspalt (8) wird zusätzlich erreicht, daß erst sehr spät, d. h. kurz vor Erreichen der Vertikallinie (7) von Ober- und Untermesser (20''', 21''') das Abscheren erfolgt, wobei das Stabende und die Stabspitze eine geringfügige Ablenkung erfahren, was den Produktionsablauf nicht beeinträchtigt und die aufzuwendenden Energiekosten minimiert.

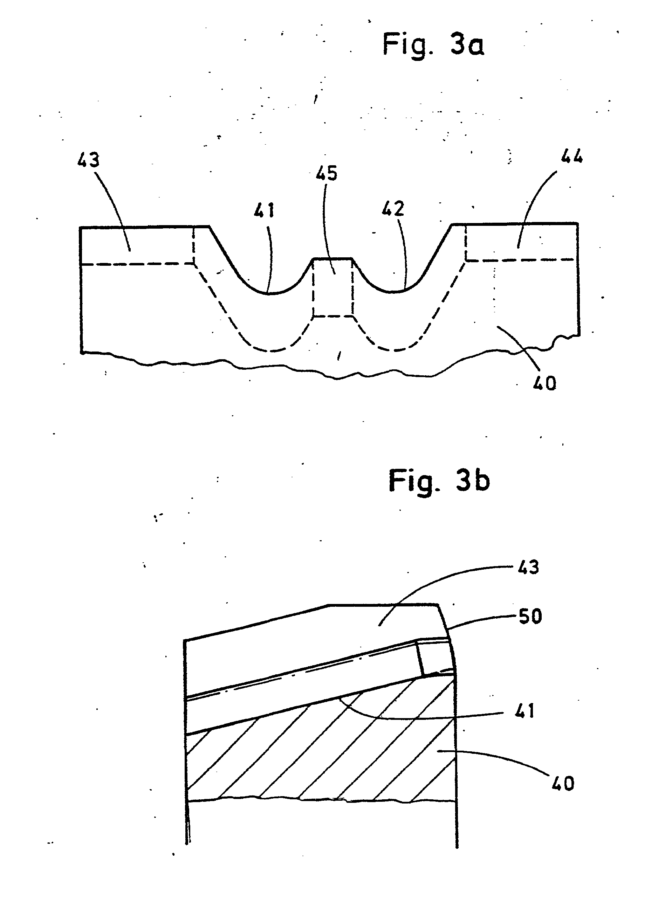

Nach den Figuren 3a und 3b sind nicht nur die Schneiden bzw. Schneidrücken dem Walzprodukt angepaßt, sondern es werden auch die Schneidkanten nach dem Profil des zu schneidenden Walzgutes (hier Stabstahl) ausgebildet. In der gewählten Ausführungsform des Untermessers (40) weist dieses zwei quer zur Walz- bzw. Förderrichtung in Abstimmung mit dem Walzgut profilierte Schneidkanten (41, 42) auf, wobei das Obermesser (nicht dargestellt) in gleicher Weise spiegelbildlich ausgebildet ist. Die Randabschnitte (43, 44) sowie das Mittelteil (45) des Untermessers (40) sind zweckmäßigerweise im sich überschneidenden bzw. im sich aufeinander abwälzenden Bereich von Ober- und Untermesser als Evolventen (50) geformt.

**Patentansprüche**

1. Rotationsschere für in Drehrichtung im Scherspalt zu förderndes und quer dazu zu schneidendes Walzgut, insbesondere für abgekühlten Stabstahl, bestehend im wesentlichen aus einem Obermesser (1, 20) und einem Untermesser (2, 21), die gegensinnig in Walzrichtung rotierend umlaufen und mit unterschiedlicher Schneidenform versehen sind, dadurch gekennzeichnet, daß die wirksamen Schneidkanten (10, 11; 30, 35) während des gesamten Schneidvorganges immer vertikal zueinander angeordnet sind, und daß Obermesser (1, 20) und Untermesser (2, 21) je einen Schneidrücken (12, 13; 31, 36) aufweisen, die parallel zur Oberfläche des zu schneidenden Walzgutes (5) beim Auftreffen ausgebildet sind.

2. Rotationsschere nach Anspruch 1, dadurch gekennzeichnet, daß die Schneidkante (10, 30) des Obermessers (1, 20) nach hinten entgegen der Drehrichtung (3) durch eine Abschrägung (16, 33) abgestützt wird, vorzugsweise in einem Winkel von etwa 45 Grad.

3. Rotationsschere nach Anspruch 1 oder 2, dadurch gekennzeichnet, daß Obermesser (1, 20) und Untermesser (2, 21) im Bereich der Schneidkanten (10, 11; 30, 35) und Schneidrücken (12, 13, 14, 15; 31, 36, 32, 37) badnitriert sind.

**Claims**

1. Rotary shears for rolled stock, in particular for cooled steel rod, which is to be conveyed through the gap of the shears in direction of rotation and to be cut transversely thereto, the shears consisting substantially of an upper blade (1, 20) and a lower blade (2, 21), which run round rotating in rolling direction in opposite sense and are provided with different shape of cutting edge, characterised thereby, that the effective cutting edges (10, 11; 30, 35) are always arranged one vertically relative to the other during the entire cutting process and that the upper blade (1, 20) and the lower blade (2, 21) each display a respective blade spine (12, 13; 31, 36), which is formed to be parallel on impingement to the surface of the rolled stock (5) to be cut.

2. Rotary shears according to claim 2, characterised thereby, that the cutting edge (10, 30) of the upper blade (1, 20) is supported rearwardly against the rotational direction (3) by a level (16, 33), preferably at an angle of about 45°.

3. Rotary shears according to claim 1 or 2, characterised thereby, that the upper blade (1, 20) and the lower blade (2, 21) are salt-bath-nitrided in the region of the cutting edges (10, 11; 30, 35) and the blade spines (12, 13, 14, 15; 31, 36, 32, 37).

## Revendications

1. Cisaille rotative destinée au transport, dans la direction de rotation, dans la fente de cisaillement et au cisaillement transversal par rapport à cette direction d'un produit laminé, notamment d'une barre d'acier refroidie, consistant essentiellement en une lame supérieure (1, 20) et une lame inférieure (2, 21) qui tournent en sens opposés, dans la direction de laminage et qui sont munies de tranchants de formes différentes, caractérisée en ce que les arêtes tranchantes efficaces (10, 11; 30, 35) sont toujours orientées perpendiculairement l'une par rapport à l'autre pendant toute la durée de l'opération de cisaille ment, et en ce que la lame supérieure (1, 20) et la lame inférieure (2, 21) présentent chacune un dos de lame (12, 13; 31, 36) qui est parallèle à la surface du produit laminé à cisailler (5) lorsqu'il vient en contact avec celle-ci.

2. Cisaille rotative selon la revendication 1 caractérisé en ce que l'arête tranchante (10, 30) de la lame supérieure (1, 20) est appuiée par l'arrière, dans le sens opposé au sens ds rotation (3) par un chanfrein (16, 33), de préférence selon un angle d'environ 45 degrés.

3. Cisaille rotative selon la revendication 1 ou 2 caractérisée en ce que la lame supérieure (1, 20) et la lame inférieure (2, 21) sont nitrurées au bain dans la zone des arêtes tranchantes (10, 11; 30, 35) et des dos de lame (12, 13, 14, 15; 31, 36, 32, 37).

# Fig. 1

# Fig. 2

# Fig. 3a

# Fig. 3b